# EUROPEAN PATENT SPECIFICATION

(11) **EP 2 296 490 B1**
(45) Date of publication and mention of the grant of the patent: **04.07.2018**
(21) Application number: 09745542.2
(22) Date of filing: 12.05.2009
(51) Int. Cl.: A23G 4/20, A23P 20/10

(54) **PROCESS FOR MANUFACTURING CHEWING GUM HAVING A COATING LAYER**
VERFAHREN FÜR DIE HERSTELLUNG VON KAUGUMMI MIT BESCHICHTUNGSSCHICHT
PROCÉDÉ POUR FABRIQUER UNE GOMME À MÂCHER COMPORTANT UNE COUCHE D'ENROBAGE

(30) Priority: 15.05.2008 IT MI20080889
(43) Date of publication of application: 23.03.2011
(73) Proprietor: Perfetti Van Melle S.p.A., 20020 Lainate (IT)
(72) Inventor: COLLE, Roberto, I-20020 Lainate (MI) (IT); SARRICA, Andrea, I-20020 Lainate (MI) (IT)
(74) Representative: Minoja, Fabrizio
(86) International application number: PCT/EP2009/003358
(87) International publication number: WO 2009/138208

(56) References cited:
- EP-A1- 1 474 994
- WO-A1-2006/040144
- GB-A- 1 491 037
- US-A1- 2007 269 577

## Description

The present invention relates to a process for the manufacture of chewing gum with a coating layer which gives the finished product excellent organoleptic characteristics which are particularly liked by consumers and appreciable as soon as chewing of the gum begins. The invention also relates to the gum obtainable by said process.

### Prior art

Chewing gum is typically made from a gum base to which one or more sweeteners are added, with the main function of making it more pleasurable for users to chew the gum.

Some well-known chewing gums are made in stick form; this was the first type of chewing gum to be launched on the market, with great commercial success. However, it has been found that stick chewing gum presents some drawbacks, such as poor flavour release in the early steps of chewing and premature aging, with consequent loss of flavour and elasticity of the rubber, which becomes particularly hard to chew.

In order to eliminate said drawbacks, chewing gum manufacturers have made a new type of product by replacing stick chewing gum with pellet-shaped chewing gum. In particular, a type of chewing gum has been made which comprises a central body (also called the core or centre in trade jargon), formed by a gum base to which one or more sweeteners are added, with a coating consisting of one or more layers of sugar or other sweetening substance. The step of application of said coating is technically known as "sugar-coating", and the chewing gum thus obtained is called "dragee" or "pellet" gum. The commercial success of this product is mainly due to the fact that the coating layer prolongs the life of the product (which maintains its elasticity and organoleptic properties for longer) and rapidly releases its flavour from the very first steps of chewing, an aspect which is particularly liked by users. The sugar-coating process, in the case of both hard and soft coatings, requires the use of a syrup, ie. a concentrated solution comprising water and at least one sugar or polyol, which is applied to the central bodies or cores of the chewing gum.

Numerous documents of the prior art relate to specific aspects of the coating process, and to products obtained from syrups of suitable compositions. See, for example, EP 1,481,597; WO 03/00068; EP 037,407; and US 5,248,508. In particular, WO 06/122220 describes a confectionery product coated with a syrup of suitable composition and subsequently with alditol crystals (the "sanding" step), which releases an intense flavour and a pleasant sensation of freshness as soon as chewing begins. GB 1,491,037 discloses a further process for sugar-coating chewing gum. However, the Applicant has found that known pellet gums, though presenting the above-mentioned advantages by comparison with stick gum, also present some drawbacks, mainly due to the use of syrups in their manufacture.

The Applicant has found that the use of a syrup in the coating process increases both the complexity and the duration of the process. For example, the syrup application step requires the time taken to distribute the syrup on the cores to be long enough for said distribution to be as even as possible. Said application step, like the further steps characterising the coating process (such as the drying step in the case of hard coatings), must be repeated for a number of cycles which generally ranges between a minimum of five and a maximum of thirty. Said process is therefore a batch process, and particularly time- and energy-intensive. There are also some significant drawbacks connected with the production of the syrup which must be used in the coating process. The process used to obtain a syrup is complex (for example, specific measures are required to ensure that the syrup has the desired concentration), time-intensive and particularly expensive in terms of the raw materials used and the equipment (for example, particular attention is required in the preparation of solutions of binding agents, such as gum arabic or gelatin, which represent a typical ingredient of the syrup-making process).

The "dusting" technique, whereby the product to be treated (such as a pellet) is sprayed with dry steam, after which a thin layer of powdered sugar or polyol is applied, is also known in the coating industry. The dry steam anchors said powder to the surface beneath it, albeit very weakly. Said powders, as such, typically have a very limited size, the mean particle size generally being less than 50 µm.

Although said technology represents an alternative to the use of the above-mentioned syrups, it also involves a number of disadvantages. Primarily, the product thus obtained presents very poor organoleptic qualities because the powdered sugar or polyols, being present in very small amounts and being of very small size, dissolves immediately in the very early steps of chewing, leading to a very short-lived perception of flavour.

### Description of the invention

The Applicant has perceived the need to prepare a process for manufacturing a chewing gum which eliminates the disadvantages of known manufacturing processes.

In particular, the Applicant has perceived the need to prepare a process for manufacturing chewing gum which is simple, fast, economical, and at the same time guarantees that the finished product will have excellent organoleptic qualities.

In other words, the Applicant has perceived the need to produce a chewing gum with a coating layer obtained by applying a coating substance in particulate form to the central body or core, while avoiding the use of a syrup as adhesive agent to anchor said particles to the outer surface of the central body or core.

The Applicant consequently decided to devise a manufacturing process able to create a permanent (ie. strong and lasting) bond between the particles of a coating substance (such as one or more sugars or polyols or combinations thereof) and the central body or core of the chewing gum, having perceived (i) the need to enhance the organoleptic qualities of the finished product by using particles of the coating substance, which give a much better result than powders of the same coating substance, and (ii) the need to eliminate the problems caused in the manufacturing process, as stated above, by the use of a syrup as a coating means in itself or as an adhesive to anchor powders or crystals to the surface of the chewing gum core.

The Applicant has found that the particles of a coating substance can be advantageously anchored to the core of the chewing gum by placing them in contact with a fluid consisting essentially of water, preferably hot water, for example by spraying or immersion (bath). The Applicant has found that if the outer surface of the core is suitably wetted with water, the particles of the coating substance will cling firmly to said core. The invention relates to the process of claim 1. Preferred embodiments are shown in the dependent claims. The term "fluid consisting essentially of water" means water in the liquid or steam state, possibly mixed with other liquids such as flavourings or ethanol. The use of water at a temperature of between 20°C and 100°C is preferred; more preferably between 25°C and 75°C; and even more preferably between 30°C and 50°C. The term "placing in contact" means any suitable technique such as spraying, immersion or wetting of the cores, or equivalent techniques. The choice of the most suitable method will depend on the type of manufacturing plant and whether the manufacturing process is continuous or discontinuous.

The term "particulate form" means a solid in the form of an amorphous powder, encapsulated, granulated, coated with flavouring substances or crystalline, having a particle size greater than 50 µm.

### Brief description of figures

- Figures 1a and 1b show the block diagram of a first form of embodiment of the manufacturing process according to the invention, and
- Figure 2 shows the block diagram of a second form of embodiment of the manufacturing process according to the invention.

### Detailed description of the invention

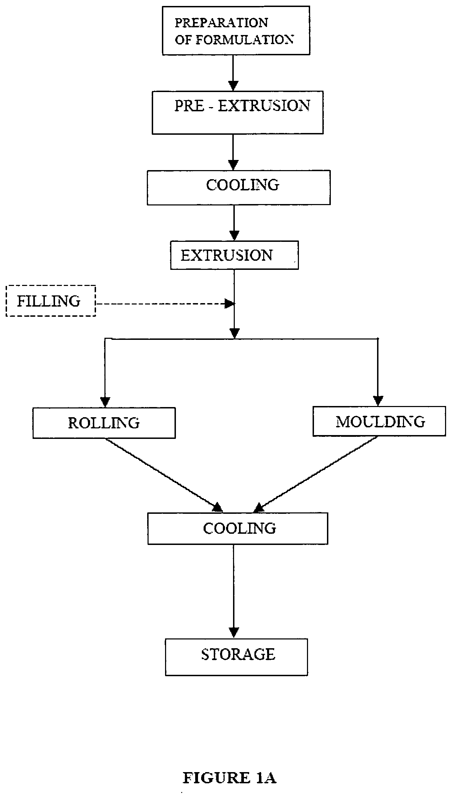

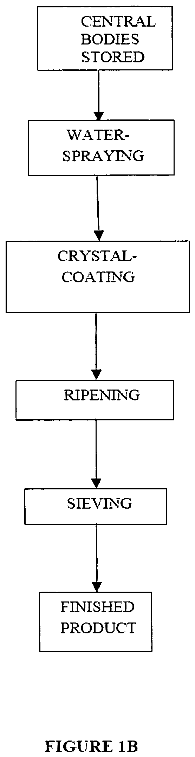

Figures 1a and 1b represent the block diagram of a batch manufacturing process of a coated chewing gum according to a first form of embodiment of the disclosure. As shown in Figure 1a, the first step of the process is the preparation of a formulation from which the core of the chewing gum is obtained. As already stated, the core typically comprises at least one gum base and at least one sweetener, which can be chosen from sugars (in solid form, such as dextrose, or in the form of a syrup, such as glucose syrup), polyols (in solid form, such as sorbitol, or in the form of a syrup, such as maltitol syrup), and combinations thereof. The formulation may also contain one or more of the following substances: flavouring agents in solid or liquid form, wetting agents, technological adjuvants such as emulsifiers or plasticisers, pharmacological active constituents, plant extracts, functional ingredients such as vitamins or mineral salts, and colorants.

When the formulation has been prepared (ie. its constituents have been chosen and suitably measured), it is processed to obtain a plurality of cores constituted by the chewing gum. The formulation can be processed by any known methodology, such as the use of continuous extruders or batch mixing equipment. According to the manufacturing process illustrated in Figure 1a, once the formulation has been obtained it undergoes two consecutive extrusion steps. In detail, Figure 1a illustrates a step of pre-extrusion (first extrusion step) from which the formulation is extruded in the form of slabs with a very soft texture. After a cooling step, said slabs are subjected to an extrusion step (second extrusion step) from which the formulation, suitably processed and with its constituents evenly amalgamated, is extruded in the form of cylindrical ropes or sheets. As shown in Figure 1a, in order to form the plurality of cores of the chewing gum, the formulation exiting from the extrusion step (second extrusion step) is sent to a subsequent rolling or moulding step. Preferably, the cores obtained from the rolling or moulding step present a discoid, cylindrical, cubic or spherical geometrical configuration, with a longitudinal cross-section which is diamond-shaped, rectangular or rectangular with rounded corners (pillow-shaped). The cores thus obtained preferably undergo a cooling step, which is consequently subsequent to the rolling or moulding step.

As shown in figure 1a, the manufacturing process according to the disclosure can also include a step of introduction into the extruded formulation of a substance designed to fill the body of the chewing gum, said introduction step being performed after the extrusion step and before the rolling or moulding step. The filling can be liquid or solid and, depending on the type of core and filling material, the latter may be visible from the outside through the core.

The batch manufacturing process according to the form of embodiment illustrated in Figure 1a includes a step of storage of the cores after they have been obtained by rolling or moulding and cooled.

Figure 1b represents the block diagram of the successive steps of the batch manufacturing process illustrated so far by reference to Figure 1a.

In detail, according to the invention, the previously stored cores undergo a step of spraying with water in order to wet at least the outer surface of each core.

Subsequently, when the cores possess the desired degree of wetting, which has been uniformly applied to all the cores, the manufacturing process according to the invention comprises a step of coating the wetted outer surface of each core with particles of a coating substance.

The spraying step is advantageously performed with hot water, which softens the surface of the cores and therefore ensures better adherence and anchorage of the granules to the cores. Preferably, the water has a temperature of between 25°C and 75°C; even more preferably, the water has a temperature of between 30°C and 50°C.

According to the invention, the use of drinking water is preferred; alternatively, the use of demineralised water or softened water is possible.

As stated above, the spraying step is conducted in order to wet the outer surface of the cores. For this purpose, the quantity of water is between 1.0% and 5.0% by weight of the core.

As already stated, the manufacturing process according to the invention includes a step of coating the wetted outer surface of each core with a plurality of particles of a coating substance. Said particles can be distributed on the outer surface of the cores to form one or more layers of said particles. Preferably, said coating substance consists of one or more sugars, or one or more polyols. Alternatively, said coating substance consists of a combination of one or more sugars with one or more polyols.

The particularly preferred polyols are alditols. The particularly preferred alditols are xylitol, sorbitol, maltitol, mannitol, isomalt and erythritol. The sugar or polyol crystals can also be used encapsulated or granulated, internally flavoured or coated on the surface with flavouring agents. The particles of coating substance have a mean particle size greater than 50 µm, preferably between 100 µm and 700 µm, and more preferably between 200 µm and 500 µm.

In addition to the particles of coating substance, the step of coating the wetted outer surface of the chewing gum cores may optionally include the application of powdered agents such as sweeteners, acidifiers, fruit juices, vitamins, functional ingredients and flavourings. According to the manufacturing process to which the invention relates, the water-spraying and particle-coating steps can be conducted either discontinuously or continuously.

According to the batch method, a pre-determined quantity of cores (originating from the storage station) is loaded into one or more substantially cylindrical containers ("coating pans") which are made to rotate simultaneously with the water-spraying step. In detail, the water, of the predetermined quantity and temperature, is introduced into each container, for example by means of suitable nozzles. The process parameters, such as the rotation speed of the coating pan and the time for which the cores remain in said pan, are suitably regulated in order to achieve complete, uniform wetting of the outer surface of the cores. When the desired degree of wetting has been obtained, a suitable quantity of particles is introduced into the rotating containers. Said rotation is maintained until the particles cover the outer surface of the cores evenly and homogeneously. A surplus quantity of particles is preferably used to ensure correct coating of all the cores present in the coating pan.

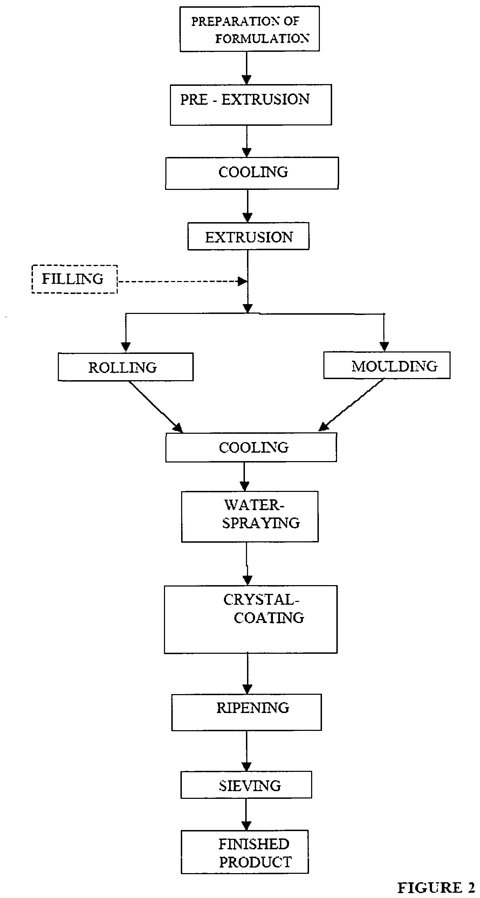

When the coating step has been completed, the cores thus treated are unloaded from the coating pan and sent to the subsequent steps of the manufacturing process, as indicated in detail below. Figure 2 illustrates the block diagram of a second form of embodiment of the manufacturing process according to the invention.

In particular, the manufacturing process shown in Figure 2 is a continuous process which does not include the storage step illustrated in Figures 1 a and lb; the cores, once obtained and cooled, are directly subjected to the water-spraying step.

With the exception of the storage step, the manufacturing process shown in Figure 2 is therefore identical to the manufacturing process described by reference to Figures 1a and 1b. In particular, according to the continuous operational methodology, the cores originating from the cooling step are fed on a conveyor belt to one or more continuous coating pans rotating at a pre-determined speed. The coating pans used in continuous processes are open on two opposite sides to guarantee continuous handling of the incoming and outgoing cores. In the coating pans the cores undergo the water-spraying step according to the predetermined quantities and temperatures, in order to ensure complete, uniform wetting of their outer surface. The process parameters, such as the dimensions of the coating pans, rotation speed, transit speed and height of core bed, are suitably detected and regulated to guarantee that the water is optimally dispersed over the surface of the cores. The wet cores are unloaded from the coating pans and conveyed to a sanding station where, according to a preferred form of embodiment, the cores pass through a cascade of particles or crystals of the coating substance, which said cascade feeds a bed of particles present in one or more additional rotating coating pans. The cores are therefore dropped onto the bed of particles, whereupon said particles are deposited on the wet surface of the cores, and continue to cling to said surface. The terminal section of the sanding pans is perforated so that excess particles can fall through the holes and be recycled to said cascade.

When the spraying and coating steps (whether discontinuous or continuous) have been completed, the coated cores undergo a ripening step, which lasts 24 hours and is conducted at a controlled temperature and humidity. At the end of the ripening step, the manufacturing process according to the invention also includes a step in which the coated cores thus obtained are sieved. The sieving step, preferably conducted with one or more vibrating screens, discards crystals which adhere weakly to the surface of the cores, and any non-conforming products such as agglomerates of two or more coated cores (called "doubles" in trade jargon). At the end of the sieving step the manufacturing process according to the invention is concluded, and the end product thus obtained (ie. the chewing gum constituted by said coated cores) is ready for the final packaging steps. The finished product (ie. the coated chewing gum) typically presents a percentage of coating substance particles amounting to over 3% of the total weight of the finished product.

Two examples and a comparative example according to a conventional process, are set out below. Examples outside the extent of the claims are provided as reference.

### Example 1

Coated chewing gum has been produced by the batch process, as illustrated in Figures 1a and lb described above. Table 1 lists the main constituents of the formulation used to make the cores.

**Table 1**

| **TYPE A CORE** | |
|---|---|
| CONSTITUENT | % in weight |
| Gum base | 32.3 |
| Caramel | 0.1 |
| Hydrogenated glucose syrup | 1.5 |
| Powdered sorbitol | 45.0 |
| Xylitol | 7.5 |
| Mannitol | 7.5 |
| Aspartame | 0.5 |
| Glycerol | 3.0 |
| Natural flavourings and other additives | 2.6 |

The formulation was subjected to extrusion followed by moulding, to obtain discoid-shaped cores A. After a storage step, said cores were placed in a water bath at the temperature of 35°C for 1 min, in a batch coating pan rotating at a speed of approx. 7 rpm. The quantity of cores A loaded into the coating pan was approx. 80 kg, and the quantity of water was approx. 1.5 kg. When the spraying step had been completed, wetted cores A underwent the step of application of the crystals of coating substance. Maltitol crystals with a mean particle size of approx. 200 µm were used. The application step was conducted in the rotating batch coating pan, into which approx. 8.0 kg of crystals was introduced. The dispersion time of the crystals on the outer surface of cores A was approx. 3 min. When the crystal application step had been completed, the coating pan was unloaded and the chewing gum thus obtained was subjected to a ripening step for 24 h, at the temperature of 23°C and approx. 30% relative air humidity.

At the end of the ripening step, the product obtained underwent a sieving step. The finished product (ie. the coated chewing gum) presented a percentage by weight of crystals of coating substance amounting to 6% of the total weight of the product.

### Example 2

Coated chewing gum was produced by the continuous process as illustrated in Figure 2 described above. Table 2 lists the main constituents of the formulation used to make the cores.

**Table 2**

| **TYPE B CORE** | |
|---|---|
| CONSTITUENT | % in weight |
| Gum base | 34.3 |
| Hydrogenated glucose syrup | 0.3 |
| Powdered sorbitol | 50.0 |
| Xylitol | 7.0 |
| Aspartame | 0.3 |
| Glycerol | 2.5 |
| Natural flavourings and other additives | 3.0 |

The formulation was subjected to extrusion followed by rolling to obtain cores B having a rectangular longitudinal cross-section with rounded corners (pillow-shaped). At the end of the cooling step, cores B were subjected to a separation step. Subsequently, using a conveyor belt, cores B were subjected to the water-spraying step at the temperature of 50°C for a period of 30 s, in a continuous coating pan rotating at the speed of approx. 5 rpm. The flow rate of cores B introduced into the coating pan was approx. 400 kg/h, and the corresponding quantity of water sprayed was approx. 4.5 kg/h. When the spraying step had been completed, wetted cores B were conveyed to a second continuous coating pan in which they underwent the step of application of crystals of the coating substance.

Xylitol crystals with a mean particle size of approx. 500 µm were used. Approx. 100 kg of crystals was introduced into the second coating pan, rotating at a speed of approx. 10 rpm. The transit time in the crystal bed was approx. 1 min. When the step of application of the crystals had been completed, the chewing gum thus obtained was subjected to a ripening step for 24 h, under controlled temperature and humidity conditions. At the end of the ripening step, the product obtained underwent a sieving step.

### Example 3 (Comparative)

Coating chewing gum was produced by a conventional manufacturing process. In detail, cores B obtained from the constituents according to the operational methodology described in example 2 were used. At the end of the cooling and separation step, cores B were subjected to spraying with maltitol syrup and gum arabic and then to the xylitol crystal application step.

Apart from the use of the syrup instead of water at the spraying step, the continuous process described in comparative example 3 was conducted in the same plant and with the same process parameters as described above for the continuous process according to the invention described in example 2.

The process according to the invention offers a number of advantages compared with known manufacturing processes.

Primarily, other conditions being equal, the process according to the invention produces chewing gum with a larger number of particles or crystals adhering to the surface of the cores. In other words, the manufacturing process according to the invention is more effective than known manufacturing processes because the coating percentage is greater.

This aspect is clearly evident when the data contained in Tables 3 and 4 below are compared.

**Table 3**

| Weight | Example 2 (invention) | Example 3 (comparative) |
|---|---|---|
| Weight of core B | 1.800 g/piece | 1.800 g/piece |
| Weight of core B after wetting | 1.825 g/piece | 1.825 g/piece |
| Weight of core B after application of crystals | 1.959 g/piece | 1.920 g/piece |
| Weight of core B after sieving | 1.928 g/piece | 1.880 g/piece |
| Weight of crystals in finished product | 0.128 g/piece | 0.080 g/piece |

**Table 4**

| Weight | Example 2 (invention) | Example 3 (comparative) |
|---|---|---|
| % weight increase of core B after wetting | 1.14% | 1.33% |
| % weight increase of core B due to application of crystals alone | 6.95% | 5.05% |
| % weight loss of finished product after sieving | - 1.60% | - 2.13% |

The values specified in Tables 3 and 4 consequently show that the manufacturing process according to the invention promotes greater adherence of the crystals to the cores, as the total weight of the crystals as a percentage of the finished product is greater in the process according to the invention than in known processes. This finding is confirmed by the fact that the product according to the invention weighs more than the product according to the prior art before the sieving step, and that the weight loss (expressed as a percentage) of the product according to the invention is lower than that of the product according to the prior art at the end of the sieving step.

Moreover, as already stated, the manufacturing process according to the invention is simple and cheap because it does not present the complexity in terms of equipment or operating conditions typical of manufacturing processes using syrups. Moreover, in at least one form of embodiment, the manufacturing process according to the invention can be conducted continuously with core manufacture, a particularly advantageous aspect in terms of reducing costs and time. Finally, as the manufacturing process according to the invention considerably reduces the production of "doubles" (two pieces of chewing gum sticking together), which inevitably represent manufacturing waste, the manufacturing process according to the invention achieves higher productivity than known processes.

## Claims

1. Process for manufacturing chewing gum, said chewing gum comprising a core formed by at least one gum base and at least one sweetener, which process consists of the steps of:
a) processing a chewing gum formulation to obtain a plurality of cores;
b) spraying a fluid consisting of liquid water in a quantity between 1.0% to 5.0% by weight of the core so as to wet the outer surface of each core;
c) coating the wet outer surface of each core with at least one coating substance selected from sugars, polyols and combinations thereof in particulate form, optionally mixed with at least one powdered agent;
d) ripening of the coated cores for 24 hours at a controlled temperature and humidity;
e) sieving of the coated ripened cores.

2. Process as claimed in claim 1, wherein the mentioned liquid water is at a temperature of between 20°C and 100°C, preferably between 25°C and 75°C, and more preferably between 30°C and 50°C.

3. Process as claimed in any one of the preceding claims, wherein the water is drinking water, demineralised water or softened water.

4. Process as claimed in any one of the preceding claims, wherein the coating substance in particulate form is selected from the forms of amorphous powder, granulates, encapsulates or crystals and combinations thereof.

5. Process as claimed in claim 4, wherein the coating substance is an alditol.

6. Process as claimed in claim 5, wherein the alditol is selected from xylitol, sorbitol, maltitol, mannitol, isomalt, and erythritol.

7. Process as claimed in any one of the preceding claims, wherein the coating substance in particulate form is mixed with at least one powdered agent.

8. Process as claimed in claim 7, wherein said powdered agent is chosen from the group comprising sweeteners, acidifiers, fruit juices, vitamins, functional ingredients, flavouring agents and combinations thereof.

9. Process as claimed in any one of the preceding claims, wherein the coating substance in particulate form is coated wholly or partly with an ingredient having a flavouring function, preferably in the form of an oil.

10. Process as claimed in any one of the preceding claims, wherein said cores are moulded in a discoid, cylindrical, cubic or spherical shape, with a longitudinal cross-section which is diamond-shaped, rectangular, or rectangular with rounded corners.

## Patentansprüche

1. Verfahren zum Herstellen von Kaugummi, wobei der Kaugummi einen Kern umfasst, der durch mindestens eine Gummibasis und mindestens einen Süßstoff ausgebildet wird, wobei das Verfahren aus den Schritten:
a) Prozessieren einer Kaugummi-Formulierung, um eine Vielzahl von Kernen zu erhalten;
b) Sprühen einer Flüssigkeit, die aus flüssigen Wasser besteht, in einer Menge zwischen 1,0% bis 5,0% nach Gewicht des Kerns, um die äußere Oberfläche jedes Kerns zu befeuchten;
c) Beschichten der äußeren feuchten Oberfläche jedes Kerns mit mindestens einer Beschichtungssubstanz, ausgewählt aus Zuckern, Polyolen und Kombinationen davon, in partikulärer Form, gegebenenfalls vermischt mit mindestens einem gepulverten Mittel;
d) Reifen der beschichteten Kerne für 24 Stunden bei einer kontrollierten Temperatur und Luftfeuchtigkeit;
e) Sieben der beschichteten, gereiften Kerne
besteht.

2. Verfahren, wie in Anspruch 1 beansprucht, wobei das beschriebene flüssige Wasser bei einer Temperatur zwischen 20°C und 100°C, vorzugsweise zwischen 25°C und 75°C und mehr bevorzugt zwischen 30°C und 50°C vorliegt.

3. Verfahren, wie in einem jeglichen der vorherigen Ansprüche beansprucht, wobei das Wasser Trinkwasser, demineralisiertes Wasser oder entkalktes Wasser ist.

4. Verfahren, wie in einem jeglichen der vorherigen Ansprüche beansprucht, wobei die Beschichtungssubstanz in partikulärer Form aus den Formen von einem amorphen Pulver, Granula, eingekapselten Substanzen oder Kristallen und Kombination davon ausgewählt ist.

5. Verfahren, wie in Anspruch 4 beansprucht, wobei die Beschichtungssubstanz ein Alditol ist.

6. Verfahren, wie in Anspruch 5 beansprucht, wobei das Alditol aus Xylitol, Sorbitol, Maltitol, Mannitol, Isomalt und Erythritol ausgewählt ist.

7. Verfahren, wie in einem jeglichen der vorherigen Ansprüche beansprucht, wobei die Beschichtungssubstanz in partikulärer Form mit mindestens einem gepulverten Mittel vermischt ist.

8. Verfahren, wie in Anspruch 7 beansprucht, wobei das gepulverte Mittel aus der Gruppe ausgewählt ist, die Süßstoffe, Säuerungsmittel, Fruchtsäfte, Vitamine, funktionelle Bestandteile, Aromastoffe und Kombinationen davon umfasst.

9. Verfahren, wie in einem jeglichen der vorherigen Ansprüche beansprucht, wobei die Beschichtungssubstanz in partikulärer Form vollständig oder teilweise mit einem Bestandteil, der eine aromatisierende Funktion aufweist, vorzugsweise in der Form eines Öls, beschichtet ist.

10. Verfahren, wie in einem jeglichen der vorherigen Ansprüche beansprucht, wobei die Kerne in eine diskoidale, zylindrische, würfelförmige oder sphärische Form mit einem longitudinalem Querschnitt geformt werden, der diamantenförmig, rechteckig oder rechteckig mit abgerundeten Ecken ist.

## Revendications

1. Procédé de fabrication de gomme à mâcher, ladite gomme à mâcher comprenant un coeur formé d'au moins une base gomme et d'au moins un édulcorant, lequel procédé est constitué des étapes de :
a) transformation d'une formulation de gomme à mâcher pour obtenir une pluralité de coeurs ;
b) pulvérisation d'un liquide constitué d'eau liquide en une quantité comprise entre 1,0% à 5,0% en poids du coeur afin d'humidifier la surface externe de chaque coeur ;
c) enrobage de la surface externe humide de chaque coeur avec au moins une substance d'enrobage sélectionnée parmi les sucres, les polyols et leurs combinaisons sous la forme de particules, éventuellement mélangée avec au moins un agent en poudre ;
d) mûrissage des coeurs enrobés durant 24 heures à une température et une humidité contrôlées ;
e) tamisage des coeurs enrobés mûris.

2. Procédé tel que revendiqué selon la revendication 1, l'eau liquide mentionnée se trouvant à une température comprise entre 20°C et 100°C, préférablement entre 25°C et 75°C, et plus préférablement entre 30°C et 50°C.

3. Procédé tel que revendiqué selon l'une quelconque des revendications précédentes, l'eau étant de l'eau potable, de l'eau déminéralisée ou de l'eau adoucie.

4. Procédé tel que revendiqué selon l'une quelconque des revendications précédentes, la substance d'enrobage sous forme de particules étant sélectionnée parmi les formes de poudre amorphe, les granulés, les substances encapsulées ou les cristaux et leurs combinaisons.

5. Procédé tel que revendiqué selon la revendication 4, la substance d'enrobage étant un alditol.

6. Procédé tel que revendiqué selon la revendication 5, l'alditol étant sélectionné parmi le xylitol, le sorbitol, le maltitol, le mannitol, l'isomalt, et l'érythritol.

7. Procédé tel que revendiqué selon l'une quelconque des revendications précédentes, la substance d'enrobage sous forme de particules étant mélangée avec au moins un agent en poudre.

8. Procédé tel que revendiqué selon la revendication 7, ledit agent en poudre étant choisi dans le groupe comprenant les édulcorants, les acidifiants, les jus de fruits, les vitamines, les ingrédients fonctionnels, les agents aromatisants et leurs combinaisons.

9. Procédé tel que revendiqué selon l'une quelconque des revendications précédentes, la substance d'enrobage sous forme de particules étant enrobée entièrement ou partiellement d'un ingrédient présentant une fonction aromatisante, préférablement sous la forme d'une huile.

10. Procédé tel que revendiqué selon l'une quelconque des revendications précédentes, lesdits coeurs étant moulés sous une forme discoïde, cylindrique, cubique ou sphérique, avec une section transversale longitudinale qui est une forme de diamant, rectangulaire, ou rectangulaire avec des coins arrondis.
